(19) Europäisches Patentamt
European Patent Office
Office européen des brevets

(11) EP 0 508 415 B1

(12) **EUROPEAN PATENT SPECIFICATION**

(45) Date of publication and mention of the grant of the patent:
**28.08.1996 Bulletin 1996/35**

(51) Int Cl.[6]: **C08L 23/10**, C08L 23/06, C08L 51/06, C08J 5/18, C08K 3/26

(21) Application number: **92106090.1**

(22) Date of filing: **08.04.1992**

(54) **A mat film or sheet and method for preparing the same**

Matter Film und dessen Herstellungsverfahren

Film mat et son procédé de préparation

(84) Designated Contracting States:
**DE FR GB**

(30) Priority: **09.04.1991 JP 103847/91**
**05.08.1991 JP 219150/91**
**05.08.1991 JP 219151/91**

(43) Date of publication of application:
**14.10.1992 Bulletin 1992/42**

(73) Proprietor: **Nippon Petrochemicals Company, Limited**
**Tokyo (JP)**

(72) Inventors:
- **Koichi, Fujii**
  **Yokosuka-shi, Kanagawa-ken (JP)**
- **Koichi, Komaki**
  **Yokohama-shi, Kanagawa-ken (JP)**
- **Shigeki, Komori**
  **Sagamihara-shi, Kanagawa-ken (JP)**
- **Minoru, Tajima**
  **Yokohama-shi, Kanagawa-ken (JP)**

(74) Representative:
**Strehl Schübel-Hopf Groening & Partner**
**Maximilianstrasse 54**
**80538 München (DE)**

(56) References cited:
**EP-A- 0 186 472**
**EP-A- 0 188 123**
**EP-A- 0 333 973**

- **US-H-H582**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

(1) Field of the Invention

The present invention relates to a mat film or sheet. More particularly, the present invention relates to a mat film or sheet prepared from a specific polymer blend. The invention also relates to a method for preparing the same. The mat film or sheet prepared by the specific method of the present invention is good in mat properties, feel and flexibility; and excellent in tensile modulus, laminating properties, impact resistance, and scratch resistance.

Further, the present invention relates to a mat film or sheet prepared from the polymer blend which further comprises at least one of inorganic fillers and flame retardants. In this case, the mat film or sheet further has characteristics such as flame resistance, chalk resistance and covering power.

Mat films or sheets of the present invention can be widely used to fabricate various articles such as adhesive tapes, covers or cases for stationeries, fashion bags, sheets for interior finish work in construction and automobile industries, and sheets for dressing steel plates.

(2) Description of the Prior Art

Until now, polyvinyl chloride (hereinafter also referred to as PVC) resins have been used for the preparation of mat films or sheets. Two main drawbacks of the PVC film or sheet are: 1) the blooming of plasticizer which can cause the deterioration of flexibility of the film or sheet; and 2) a large amount of HCl gas is evolved when subjected to combustion.

At present, such PVC mat films or sheets have been replaced by polyolefin-based films having no such problem. Japanese Laid Open Publication No. 50-56451 discloses a process for preparing a polyolefin-based mat film or sheet prepared directly from a polyethylene having a specific melt flow rate (MFR) and a specific ratio of high-load MFR to low-load MFR by extruding or molding the polyethylene under specific conditions. Japanese Laid Open Publication No. 59-2 15343 discloses a process for blending an ethylene-vinylacetate copolymer resin (EVA) with a low-density ethylene- α -olefin copolymer (LLDPE).

In this case, tensile modulus (a measure of the firmness of film), thermal resistance and covering power of the film or sheet are insufficient to satisfy the requirements.

Further, Japanese Laid Open Publication No. H1-185306 discloses a copolymer of propylene with a vinyl trialkylsilane in an amount of the order of a few ppm. In this case, the films or sheets exhibit poor flexibility and covering power, although thermal resistance may be improved. Japanese Laid Open Publication H2-92944 describes a polypropylene-based mat sheet prepared from a polymeric blend of a polypropylene resin, a high-density super high-molecular weight polyethylene (HDPE), a super high-molecular weight elastomer, and an inorganic filler. According to the disclosure, tensile modulus, thermal resistance and covering power of the sheet are improved to some extent. However, the sheet still exhibits pobr flame resistance, laminating properties, chalk and scratch resistance. Therefore, there is still a need for improvement of these poor properties.

US-A-4148955 discloses a process for preparing a mat film by further blending glass balloons having an average particle diameter of 0.5 to 75 µm. GB-A-1453649 proposes an improved process for preparing a composite mat film having both surface layers of an ethylene-propylene block copolymer. Further, GB-A-1581686 proposes a process for preparing a mat film by calendering a resin using a pair of rolls revolving at different circumferential speeds. In these cases, productivity is low, and tensile modulus, flexibility, laminating properties and impact resistance are insufficient to satisfy the requirements.

SUMMARY OF THE INVENTION

Accordingly, the principal object of the present invention is to provide a polyolefin-based mat film or sheet free from the above-described problems. The object of the invention is also to provide a method for preparing the same. Mat films or sheets of the present invention are good in feel, flexibility, and have external appearance of high rank. Further, mat films or sheets of the invention are excellent in tensile modulus, impact and thermal resistance, laminating properties, flame resistance, chalk resistance, covering power, and scratch resistance, and the like.

According to a first aspect of the present invention, there is provided a mat film or sheet prepared from a polymer blend comprising

component (A); 10 to 90 % by weight of a propylene polymer or copolymer, and

component (B); 90 to 10 % by weight of an ethylene-α-($C_{3-12}$ olefin) copolymer satisfying the following conditions (I) to (III):

(I) a density of 0.860 to 0.910 $g/cm^3$;

(II) a maximum peak temperature of not lower than 100 °C as measured by DSC (differential scanning calorimetry);
(III) a content of insolubles in boiling n-hexane of not lower than 10 % by weight.

Said mat film or sheet is prepared by extruding or molding the above-described polymer blend at a temperature of 180 °C to 280 °C to provide a film or sheet, followed by cooling the resulting film or sheet to a temperature below 50°C to give a film or sheet having a gloss (60°) of not more than 30 %.

According to a second aspect of the present invention, there is provided a mat film or sheet prepared from a polymer blend comprising

component (A); 10 to 80 % by weight of a propylene polymer or copolymer,
component (B); 5 to 30 % by weight of an ethylene-α-($C_{3-12}$ olefin) copolymer satisfying the following conditions (I) to (III):

(I) a density of 0.860 to 0.910 g/cm$^3$;
(II) a maximum peak temperature of not lower than 100 °C as measured by DSC (differential scanning calorimetry);
(III) a content of insolubles in boiling n-hexane of not lower than 10 % by weight; and

component (C); 5 to 85 % by weight of at least one of the components selected from the group consisting of high-pressure radical polymerization process ethylene polymers or copolymers and polyolefin-based modified resins which have been modified by use of a monomer selected from the group consisting of

a) carboxylic acid group-, carboxylic acid ester group- or acid anhydride group-containing monomers,
b) epoxy group-containing monomers,
c) hydroxyl group-containing monomers,
d) amino group-containing monomers,
e) alkenyl cyclic imino ether derivative monomers, and
f) multifunctional monomers.

Said mat film or sheet is prepared by extruding or molding the above-described polymer blend at a temperature of 180 °C to 280 °C to provide a film or sheet, followed by cooling the resulting film or sheet to a temperature below 50°C to give a film or sheet having a gloss (60°) of not more than 30 %.

According to a third aspect of the present invention, there is provided a method for the preparation of a mat film or sheet comprising

extruding or molding a polymer blend at 180 to 280°C to provide a film or sheet, wherein the polymer blend comprises the following components (A) and (B):

component (A); 10 to 90 % by weight of a propylene polymer or copolymer, and
component (B); 90 to 10 % by weight of an ethylene-α-($C_3$-$_{12}$ olefin) copolymer satisfying the following conditions (I) to (III):

(I) a density of 0.860 to 0.910 g/cm$^3$;
(II) a maximum peak temperature of not lower than 100 °C as measured by DSC (differential scanning calorimetry);
(III) a content of insolubles in boiling n-hexane of not lower than 10 % by weight; and

cooling the resulting film or sheet to a temperature below 50°C to give a film or sheet having a gloss (60°) of not more than 30 %.

According to a fourth aspect of the present invention, there is provided a method for the preparation of a mat film or sheet comprising

extruding or molding a polymer blend at 180 to 280°C to provide a film or sheet, wherein the polymer blend comprises the following components (A) to (C):

component (A); 10 to 80 % by weight of a propylene polymer or copolymer,
component (B); 5 to 30 % by weight of an ethylene-α-($C_{3-12}$ olefin) copolymer satisfying the following conditions

(I) to (III):

(I) a density of 0.860 to 0.910 g/cm$^3$;
(II) a maximum peak temperature of not lower than 100 °C as measured by DSC (differential scanning calorimetry);
(III) a content of insolubles in boiling n-hexane of not lower than 10 % by weight; and

component (C); 5 to 85 % by weight of at least one of the components selected from the group consisting of high-pressure radical polymerization process ethylene polymers or copolymers and polyolefin-based modified resins which have been modified by use of a monomer selected from the group consisting of

a) carboxylic acid group-, carboxylic acid ester group- or acid anhydride group-containing monomers,
b) epoxy group-containing monomers,
c) hydroxyl group-containing monomers,
d) amino group-containing monomers,
e) alkenyl cyclic imino ether derivative monomers, and
f) multifunctional monomers, and cooling the resulting film or sheet to a temperature below 50°C to give a film or sheet having a gloss (60°) of not more than 30 %.

DESCRIPTION OF THE PREFERRED EMBODIMENTS

Examples of propylene polymers or copolymers which can be used as component (A) according to the present invention include homopolymers of propylene; block copolymers or random copolymers of propylene with another α-olefin. Among them, propylene-ethylene block copolymers are particularly preferred.

Any MFR of the propylene polymer or copolymer may be employed, but when incorporated together with thereafter described specific resins, the preferred MFR of the propylene polymer or copolymer is in a range from 1 to 20 g/10 min, more preferably 5 to 10 g/10 min.

Examples of other α-olefins which can be used include ethylene, 1-butene, 4-methyl-1-pentene, 1-hexene, 1-octene, 1-dodecene, and the like, with the preferred ones being ethylene and 1-butene.

The ethylene-α-olefin copolymer as component (B) according to the present invention is a polyethylene (hereinafter also referred to as VLDPE) having properties intermediate between the ones of a linear low-density polyethylene and an ethylene- α - olefin copolymer rubber, and has a density of 0.860 to 0.910 g/cm$^3$, a maximum peak temperature (Tm) measured by differential scanning calorimetry (DSM) of not lower than 100 °C, and a content of insolubles in boiling n-hexane of over 10 % by weight.

More specifically, the copolymer (VLDPE) as component (B) according to the present invention is a copolymer of ethylene with an α-olefine having 3 to 12 carbon atoms. In the copoymer (VLDPE) as component (B), there exist both highly crystalline regions and amorphous regions. Therefore, the VLDPE is a special copolymer which possesses properties characteristic of both linear low-density polyethylenes (LLDPEs) and ethylene α-olefin copolymer rubbers. Examples of such properties include good mechanical properties and thermal resistance which are the features of LLDPEs, and self-adhesive, rubbery elasticity and impact resistance at low temperatures which are the features of amorphous polymers such as ethylene-α-olefin copolymer rubbers. Accordingly, VLDPEs are extremely useful for the preparation of a mat film or sheet according to the present invention.

Typical examples of α-olefins which can be used include propylene, 1-butene, 4-methyl-1-pentene, 1-hexene, 1-octene and 1-dodecene, and the like, with the most preferred one being 1-butene.

The preferred amount of the α-olefin in the ethylene-α-olefin copolymer is in a range from 5 to 40 X by mole.

The VLDPE may be prepared in the presence of a catalyst system comprising a solid catalyst component containing at least Mg and Ti and an organic aluminum compound.

Examples of such solid catalyst conponents which can be used include a Ti compound supported on an Mg-based inorganic solid compound as carrier such as metallic Mg; magnesium hydroxide; magnesium oxide; magnesium salts such as magnesium chloride; double salts, double oxides, carbonates, chlorides or hydroxides containing an element selected from the group consisting of Si, Al, Ca and Mg atom as magnesium carbonate; or reaction products or treated products thereof by use of an oxygen-, sulfur-containing compound, an aromatic hydrocarbon or a halogen-containing compound.

Examples of the aforesaid oxygen-containing compound include, for example, water; oxygen-containing organic compounds such as alcohols, phenols, ketones, aldehydes, carboxylic acids, esters, polysiloxanes, and acid amides; oxygen-containing inorganic compounds such as metal alkoxides and metal oxychlorides.

Examples of the sulfur-containing compound include organic sulfur-containing compounds such as thiols and thioethers; and inorganic sulfur-containing compounds such as sulfur dioxide, sulfur trioxide and sulfuric acid.

Examples of the aromatic hydrocarbon include monocyclic and multicyclic aromatic hydrocarbons such as benzene, toluene, xylenes, anthracenes, phenanthrenes.

Examples of the halogen-containing compound include chlorine, hydrogen chloride, metal chlorides, organic halides.

Examples of the Ti compound supported on the inorganic solid compound as a carrier containing Mg include halides, alkoxyhalides, alkoxides, and oxyhalides of Ti, with the preferred ones being $Ti^{+4}$ and $Ti^{+3}$ compounds.

Typical examples of the $Ti^{+4}$ compound include those represented by the formula, Ti $(OR)_n$ $X_{4-n}$ (wherein R is an $C_{1-20}$ alkyl group, an aryl group or an aralkyl group, x is a halogen atom, and n is an integer which satisfies equation 0 <= n <= 4) such as $TiCl_4$, $TiBr_4$, $TiI_4$, monomethoxytrichlorotitanium, dimethoxydichlorotitanium, trimethoxymonochlorotitanium, tertamethoxytitanium, monoethoxytrichlorotitanium, diethoxydichlorotitanium, triethoxymonochlorotitanium, tertaethoxytitanium, monoisopropoxytrichlorotitanium, diisopropoxydichlorotitanium, triisopropoxymonochlorotitanium, tertaisopropoxytitanium, monobutoxytrichlorotitanium, dibutoxydichlorotitanium, monopentoxytrichlorotitanium, monophenoxytrichlorotitanium, tetraphenoxytitanium, and the like.

Examples of the $Ti^{+3}$ compound include $TiX_3$ obtained by reduction of $TiX_4$ such as $TiCl_4$ or $TiBr_4$ with hydrogen or an organometallic compound containing Al, Ti or a metal of Groups I - III of the periodic table.

Other examples of the $Ti^{+3}$ compounds include $Ti^{+3}$ compounds obtained by reduction of halogenated alkoxytitanium ($Ti^{+4}$) represented by the formula, Ti $(OR)_m$ $X_{4-m}$ (wherein R is an alkyl group having 1 to 20 carbon atoms, aryl or aralkyl group, X is a halogen atom, and m is an integer which satisfies equation 0 <= m <= 4) with an organometallic compound containing a metal in Groups I - III of the periodic table.

Among these Ti compounds, $Ti^{+4}$ compounds are particularly preferred.

Other examples of the solid catalyst component which may be employed in the present invention include a reaction product of an organomagnesium compound such as Grignard compounds with a Ti compound.

Other examples of the solid catalyst component which may be employed include a solid substance obtained by contacting the aforesaid solid calalyst containing at least Mg and Ti with an inorganic oxide such as $SiO_2$ or $Al_2O_3$.

Typical examples of the organoaluminum compound to be combined with the aforesaid solid catalyst component include $R_3Al$, $R_2AlX$, $RAlX_2$, $R_2AlOR$, RAlOR, $R_3Al_2X_3$ (wherein R is the same or different and each R is an alkyl, aryl or aralkyl group having 1 to 20 carbon atoms, x is a halogen atom) such as triethylaluminum, triisobutylaluminum, trihexylaluminum, trioctylaluminum, diethylaluminum chloride, diethylaluminum ethoxide, ethyl aluminum sesquichloride, and mixtures thereof.

Any amount of the organoaluminum compound may be used, but the preferred amount is in a range from 0.1 to 1,000 moles based on the Ti compound.

The polymerization may be carried out in the same manner as in the conventional polymerization of an olefin in the presence of a Ziegler type catalyst. More particularly, the polymerization is conducted in a substantially oxygen- and water-free atmosphere in a vapor phase or a liquid phase in the presence of an inert solvent or using the monomer per se as solvent. The polymerization temperature is in a range from 20 to 300°C , preferably 40 to 200 °C, and the pressure is in a range from normal pressure to 70 $Kg/cm^2G$, preferably 2 to 60 $Kg/cm^2G$.

Although the molecular weight may be adjusted to some extent by changing polymerization conditions such as temperature or the molar ratio of the catalyst components, it is conveniently adjusted by the addition of hydrogen into the reaction system.

Of course, stepwise polymerization involving two or more different conditions in terms of hydrogen concentration or polymerization temperature may also be employed without any trouble.

As shown in Fig. 1, the ethylene-$\alpha$-olefin copolymer (VLDPE) as component (B) according to the invntion is distinguishable from the ethylene-$\alpha$-olefin copolymer obtained by use of a conventional vanadium-based solid catalyst or a titanium-based solid catalyst component.

When the (co)monomer and the density are the same, the Tm of a VLDPE measured by DSC is always higher than that of the latter, and the insolubles content of the VLDPE is over 10 X by weight compared to that of trace or zero.

It is necessary that the ethylene- $\alpha$-olefin copolymer as component (B) thus obtained exhibit the following properties:

(I) a density of 0.860 to 0.910 $g/cm^3$, preferably 0.880 to 0.905 $g/cm^3$,

(II) a maximum peak temperature (Tm) measured by DSC of 100 °C or higher,

(III) a content of insolubles in boiling n-hexane of over 10 % by weight, preferably in a range from 20 to 95 % by weight.

When incorporated into the polymer blend of the present invention together with the aforesaid specific resins, the preferred MFR of the ethylene-$\alpha$-olefin copolymer as component (B) is in a range from 0.1 to 2.0 g/10 min.

In the present invention, at least one of the components selected from the group consisting of high-pressure radical polymerization process ethylene polymers or copolymers and modified polyolefin-based resins is incorporated into the

polymeric blend comprising components (A) and (B) to give or enhance the characeristics such as mat properties, mechanical strength, adhesiveness to metallic or plastic substrates.

The high pressure radical polymerization process ethylene polymer or copolymer as one of the components (C) is one selected. from the group consisting of conventional ethylene homopolymers, copolymers of ethylene as a main component with an α-olefin, copolymers of ethylene with an α, β-unsaturated carboxylic acid, its esters or metal salts, and ethylene-vinylester copolymers such as ethylene-vinylacetate copolymer.

Examples of the α, β-unsaturated carboxylic acid or its esters, and the vinyl esters include unsaturated carboxylic acids such as acrylic acid, methacrylic acid, maleic acid, fumaric acid, maleic anhydride, itaconic anhydride; unsaturated carboxylic acid esters such as methyl acrylate, methyl methacrylate, ethyl acrylate, ethyl methacrylate, propyl acrylate, propyl methacrylate, isopropyl acrylate, isopropyl methacrylate, n-butyl acrylate , n-butyl methacrylate, cyclohexyl acrylate, cyclohexyl methacrylate, lauryl acrylate, lauryl methacrylate, stearyl acrylate, stearyl methacrylate, maleic acid monomethyl ester, maleic acid diethyl ester, fumaric acid monomethyl ester, glycidyl acrylate, glycidyl methacrylate; and vinyl esters such as vinyl propionate, vinyl acetate, vinyl caproate, vinyl laurate, vinyl stearate, vinyl trifluoroacetic acid, and the like. Among them, (meth) acrylic acid alkyl esters or vinyl esters are preferred, with the more preferred ones being ethyl acrylate and vinyl acetate. Mixtures thereof may be employed.

Typical examples of the aforesaid copolymers include ethylene-vinylester copolymers such as ethylene-acrylic acid copolymers, ethylene-methacrylic acid copolymers, ethylene-ethylacrylate copolymers, ethylene-ethylmethacrylate copolymers, ethylene-vinylacetate copolymers; ethylene-unsaturated carboxylic acid copolymers, esters or metal salt derivatives thereof such as ethylene-glycidyl methacrylate copolymers, ethylene-acrylic acid-ethylacrylate copolymers, ethylene-vinylacetate -ethylacrylate copolymers, ethylene-glycidylaethacrylate-ethylacrylate copolymers. Among them, ethylene-ethylacrylate copolymers and ethylene vinylacetate copolymers are particularly preferred. Mixtures thereof may be employed.

When incorporated into the polymer blend of the present invention together with the aforesaid specific resins, the MFR of the copolymer is in a range from 0.1 to 2.0 g/10 min, preferably 0.3 to 1.5 g/10 min.

Examples of the modified polyolefin resin, which is another component (C) and has been modified with at least one monomer selected from the group consisting of carboxylic acid group-, carboxylic acid ester group- or acid anhydride group-containing monomers (a); epoxy group-containing monomers (b); hydroxy group-containing monomers (c); amino group-containing monomers (d); alkenyl cyclic imino ether derivatives (e); multifunctional monomers (f), include graft copolymers obtained by grafting at least one of these monomers on an polyolefin-based resin.

Examples of the aforesaid carboxylic acid group-, carboxylic acid ester group- or acid anhydride group-containing monomer (a) include α, β-unsaturated carboxylic acids such as maleic acid, fumaric acid, citraconic acid, itaconic acid; unsaturated carboxylic acids such as acrylic acid, methacrylic acid, fumaric acid, crotonic acid, vinyl acetate, pentenic acid; and esters thereof or anhydrides thereof.

Examples of the aforesaid epoxy group-containing monomer (b) include glycidyl acrylate, glycidyl methacrylate, monoglycidyl itaconate, butene tricarboxylic acid monoglycidyl ester, betene tricarboxylic acid diglycidyl ester, butene tricarboxylic acid triglycidyl ester, and glycidyl esters of α-chloroallyl, maleic acid, crotonic acid or fumaric acid; glycidyl ethers such as vinyl glycidyl ether, allyl glycidyl ether, glycidyl oxyethyl vinyl ether, styrene-p-glycidyl ether; and p-glycidyl styrene, and the like. Among them, glycidyl methacrylate and allyl glycidyl ether are particularly preferred.

Examples of the aforesaid hydroxy group-containing monomer include 1-hydroxypropyl acrylate or methacrylate, 2-hydroxypropyl acrylate or methacrylate, hydroxyethyl acrylate or methacrylate, and the like.

Examples of the aforesaid amino group-containing monomer include tert.-amino group-containing monomers such as dimethylaminoethyl acrylate or methacrylate, diethylaminoethyl acrylate or methacrylate, and dibutylaminoethyl acrylate or methacrylate.

Examples of the aforesaid alkenyl cyclic imino ether derivatitives include those represented by the following general formula:

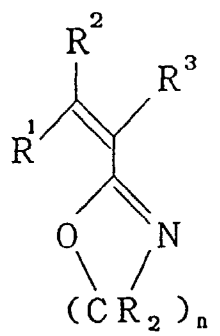

[wherein n is 1,2 or 3, preferably 2 or 3, more preferably 2, each of $R_1$, $R_2$, $R_3$ and R is an inactive alkyl group having

1 to 12 carbon atoms and/or a hydrogen atom, each of the alkyl group may have an inactive substituent group]

The term "inactive" refers to that the inactive group does not have a bad influence upon the graft polymerization or the properties of the graft copolymer.

R may be the same or different. Preferably, $R_1$= $R_2$= H, $R_3$= H or Me, and R = H, that is, the preferred alkenyl cyclic imino ethers are 2-vinyl and/or 2-isopropenyl-2-oxazoline, and 2-vinyl and/or 2-isopropenyl-5,6-dihydro-4H-1,3-oxazine.

Mixtures thereof may be employed. Among them, 2-vinyl and/or 2-isopropenyl-2-oxazoline is particularly preferred.

Examples of the aforesaid multifunctional monomer (f) include multifunctional methacrylate monomers such as trimethylolpropane trimethacrylate, ethylene glycol dimethylacrylte, diethylene glycol dimethacrylate; multifunctional vinyl monomers such as divinyl benzene, triallyl isocyanurate, diallyl phthalate, vinyl butyrat; bis-maleimides such as N,N'-m-phenylene-bis-maleimide, N,N'-ethylene-bis-maleimide; dioximes such as p-quinone dioxime, and the like

The graft modification of an olefin-based polymer with at least one of said monomers may be carried out preferably in the presence of a curing agent.

Examples of the curing agent include organic peroxides such as hydroxyperoxides, dialkylperoxides, diacylperoxides, peroxyesters and ketone peroxides; curing agents selected from the group consisting of dihydroaromatic compounds and sulfur.

Any polyolefin-based resin to be modified may be used, but preferred ones are soft polyolefin-based resins or crystalline resins such as polyethylene and polypropylene resins, with the most preferred ones being ethylene-α-olefin copolymers having a density of 0.91 to 0.87 g/$cm^3$.

The amount. of the monomer to be grafted is in a range from 0.01 to 20 % by weight, preferably 0.1 to 15 % by weight, based on the amount of the resin components.

The most preferred modified polyolefins are maleic acid-modified polyethylenes.

In the present invention wherein the polymer blend of of the present invention comprises the components (A) and component (B), the amount of the polypropylene polymer or copolymer as component (A) is in a range from 90 to 10 % by weight, preferably 80 to 10 % by weight. When the amount of the component (A) is more than 90 % by weight, flexibility deteriorates. When the amount of the component (A) is less than 10 % by weight, thermal resistance is unpreferably poor.

In the present invention wherein the polymer blend comprises components (A), (B) and (C), the amount of the polypropylene polymer or copolymer as component (A) is in a range from 10 to 80 % by weight, the amount of the ethylene-α -olefin copolymer as component (B) is in a range from 5 to 30 % by weight, and the amount of the high-pressure radical polymerization process ethylene polymer or copolymer and/or the modified polyolefin-based resin as component (C) is in a range from 5 to 85 % by weight. When the amount of the component (C) is less than 5 % by weight, mat properties deteriorate. When the amount of the component (C) is more than 85 % by weight, tensile modulus is poor unpreferably.

Both the aforesaid components (A) and (B) are polyolefin-based polymers, and the compatibility of them is relatively good. However, they are essentially incompatible (microscopically) with each other, and component (A) and (B) have their individual crystalline regions.

Thus, according to an aspect of the present invention, there is provided a convenient method for preparing films and sheets having good mat properties wherein the MFR ratio of component (A) to (B) is so adjusted that it is within the range of 5 to 20.

In this case, when the polymer blend of components (A) and (B) maintained at a temperature of 180 to 280 °C is rapidly quenched to room temperature, an opaque polymer blend can be obtained, for the reason that:

a dispersion phase having a proper particle diameter which exists in a continuous crystalline phase forms, that is, a so-called sea-island structure comprising two crystalline regions different from each other in refractive index form owing to a difference in fluidity between the two molten components (A) and (B), whereby opalescence results (an increase in haze value) caused by the scattering of light from the two regions.

On the other hand, according to a second aspect of the present invention, there is provided a convenient method for preparing films and sheets having good mat properties wherein a high-pressure radical polymerization process ethylene copolymer and/or a modified polyolefin-based resin as component (C) having a polar group is incorporated in a specific amount into the polymer blend of the components (A) and (B) which have no polar group, thereby resulting in an increase in haze value owing to a great increase in heterogeneity of the phases giving good mat properties.

In this case, the MFR ratios of (A) to (B) and (A) to (C) are so adjusted that it can be within the range of 5 to 20 and 5 to 30 respectively, resulting in an increase in haze value and opalescence for the reason that :

a dispersion phase having a proper particle diameter which exists in a continuous crystalline phase forms, that is, a so-called sea-island structure comprising two crystalline regions different from each other in refractive index forms owing to a difference in fluidity between the two molten components(A) and (B), thereby causing the opalescence (an increase in haze value) caused by the scattering of light from the two regions.

Another method for preparing films and sheets having good mat properties comprises quenching a polymer blend

of component (A) and components (B) + (C) wherein the component (A) and the components (B) + (C) are different from each other in crystallization temperature to some extent, preferably by over 5°C.

In this case, a clearly distinctive interface forms between the two different microcrystalline regions of (A) and (B) + (C), thereby further increasing the difference in refractive index. By rapidly quenching, the interface forms more quickly.

Generally, it is found that a wide growth of interfaces mingled with each other between two different crystalline regions of polyolefins is developed.

However, the inventors have found that by taking advantage of a difference in crystallization temperature and by rapid quenching, said wide growth of interfaces may be prevented, resulting in clearly distinctive interfaces and heterogeneity of phases, which contributes to enhance the mat properties of the films and sheets.

In the mat films and sheets prepared from the polymer blend comprising an polyolefin-based modified resin as component (C), the adhesiveness of the resin components to an inorganic filler and/or flame retardant is reinforced, the mechanical strength is improved, and the adhesion force to metallic or plastic substrates is also improved owing to the introduction of a polar group. In the present invention, at least one of inorganic fillers as component (D) and flame retardants (E) may be additionally incorporated into the polymer blend comprising components (A) and (B); or components (A) to (C) to improve the properties of the polymer blend such as thermal resistance, covering power, flame resistance, chalk resistance, and the like.

The inorganic filler may be used in granular, lamellar, needle, spherical, balloon and fibrous forms, and examples of these inorganic fillers include granular fillers such as calcium carbonate, magnesium carbonate, calcium sulfate, calcium silicate, clay, diatomaceous earth, talc, alumina, siliceous sand, glass powder, iron oxide, metallic powder, $Sb_2O_3$, graphite, silicon carbide, silicon nitride, silica, boron nitride, aluminum nitride and carbon black; lamellar fillers such as mica, glass plate, sericite, pyrophyllite, aluminum flake; scaly fillers such as graphite; balloon fillers such as metallic balloon, glass balloons, SHIRASU balloon and pumice; and mineral fibers such as glass fiber, carbon fiber, graphite fiber, whisker, metallic fiber, silicon carbide fiber, asbestos, and wollastonite. The most preferable filler is calcium carbonate.

The amount of the filler as component (D) to be incorporated is in a range from I to 150 parts by weight, based on 100 parts by weight of the polymer blend of a propylene polymer or copolymer as component (A) and an ethylene-α-olefin copolymer as component (B), or the polymer blend of a propylene polymer or copolymer as component (A), an ethylene-α-olefin copolymers as component (B) and a high-pressure radical polymerization process ethylene polymer or copolymer and/or a modified polyolefin-based resin as component (C).

When the amount exceeds 150 parts by weight, the mechanical properties such as impact resistance, flexibility, and chalk resistance of the resulting mat films or sheets deteriorate unpreferably. When the amount is less than 1 part by weight, the tensile modulus (a measure of the firmness of a film), flame resistance, and covering force of the resulting mat films and sheets are not improved unpreferably.

Examples of the flame retardant as component (E) include halogen-based and phosphorus-based flame retardants and inorganic flame retardants and organic flame retardants and mixtures thereof. An organic flame retardant such as a halogen-based organic flame retardant in a small amount gives a good flame resistance , and an inorganic flame retardant such as magnesium hydroxide is used preferably for the preparation of halogen-free films and sheets.

Examples of the aforesaid halogen-based flame retardants include bromine based flame retardants such as tetrabromobisphenol A (TBA) and derivatives thereof, hexabromobenzene, decabromodiphenyl ether, tetrabromoethane (hereinafte also referred to as TBE), tetrabromobutane (TBB), hexabromocyclodecane (HBCD); chlorine-based flame retardants such as chlorinated paraffins, chlorinated diphenyls, perchloropentacyclodecane, chlorinated naphthalenes; halogen-based flame retardants such as halogenated diphenylsulfide; halogenated polystyrenes such as bromostyrene, bromopoly-α-methyl styrene and derivatives thereof; halogenated polycarbonates such as bromopolycarbonate; halogenated polyesters such as polyalkylenetetrabromoterephthalate and bromoterephthalic acid-based polyester; halogenated epoxy compounds such as halogenated bisphenol-based epoxy resins;halogenated polyphenyleneoxides such as poly (dibromophenylene oxide); halogenated polymers such as cyanuric acid esters of halogenated bisphenol compounds; and the like.

Examples of the phosphorus-based flame retardant include phosphoric acid esters, halogenated phosphoric acid esters, phosphinic acid derivatives, such as tricresyl phosphate, tri(β -chloroethyl) phosphate, tri(dichloropropyl) phosphate, tri (dibromopropyl) phosphate, 2,3-dibromopropyl-2,3-choloropropyl phosphate.

Examples of other flame retardants include guanidine compounds such as guanidine nitride.

The organic flame retardant may be used together with a hereinafter-described inorganic flame retardant, such as $Sb_2O_3$, zirconium oxide or zinc borate to give a synergism.

The amount of the organic flame retardant is in a range from 1 to 100 parts by weight, preferably 5 to 50 parts by weight, based on 100 parts by weight of the polymeric blend.

When the amount is less than 1 parts by weight, the flame resistance of the resulting blend is poor. Inversely, when the amount is more than 100 parts by weight, the mechanical properties deteriorate and the cost goes up unpreferably.

Examples of the inorganic flame retardants include aluminum hydroxide, magnesium hydroxide, zirconium hydroxide, basic magnesium carbonate, dolomite, hydrotalcite, calcium hydroxide, barium hydroxide, hydrate of stannous hydroxide, hydrates of inorganic metallic compounds of borax and the like, zinc borate, zinc metaborate, barium metaborate, zinc carbonate, magnesium-calcium carbonate, calcium carbonate, barium carbonate, magnesium oxide, molybdenum oxide, zirconium oxide, stannous oxide, $Sb_2O_3$, antimony oxides and red phosphorus. These inorganic flame rerardants may be used alone or as a mixture of two or more thereof. Of these flame retardants, aluminum hydroxide, magnesium hydroxide, basic magnesium carbonate, dolomite, hydrotalcite are particularly preferred in terms of flame resistance and economics. Above all, aluminum hydroxide and magnesium hydroxide are particularly preferred.

The hydrates of inorganic metallic compounds such as aluminum hydroxide or magnesium hydroxide may be used preferably together with at least one auxiliary additive selected from the group consisting of red phosphorus, a phenol resin-coated red phosphorus, carbon black and boric acid to accelerate the formation of char (carbonized layers).

The amount of the aforesaid accelerator to promote the formation of char is in a range from 0.5 to 20 % by weight, based on the weight of the inorganic flame retardant.

The average particule diameter of the inorganic flame retardant depends on its kind, but in the cases of aluminum hydroxide and magnesium hydroxide, the average particle diameter is 20μm or less, preferably 10μm or less.

The inorganic flame retardant is used in an amount of 30 to 150 parts by weight, preferably 50 to 120 parts by weight, based on 100 parts by weight of the polymeric blend. When the amount of the inorganic flame retardant is less than 1 part by weight, flame resistance of the resulting mat film or sheet is poor, and inversely, when the amount is more than 150 parts by weight, mechanical properties, flexibility and chalk resistance of the resulting mat films or sheets deteriorate unpreferably.

The surface of the inorganic filler as component (D) or inorganic flame retardant as component (E) is preferably treated by use of stearic acid, oleic acid, palmitic acid or a metallic salt thereof, paraffin wax, polyethylene wax or a modified wax thereof, an organic silane, an organic borane or an organic titanate to coat the surface.

Examples of the organic silane compound include vinyl methoxysilane, vinyl triethoxysilane, vinyl acetyl silane, vinyl trichlorosilane, and the like.

Examples of the unsaturated organic titanate include tetraisopropyl titanate, tetra-n-butyl titanate, tetrakis (2-ethylhexoxy) titanate, titanium lactate ammonium salt, and the like.

When each of the components (A) to (E) is melted and blended together, various additives may be used in a small but effective amount, if necessary, insofar as they do not deviate from the gist of the present invention. Examples of such usable additives include an anti-static additive, an anti-fog agent, an organic filler, an antioxidant, a slip agent, organic or inorganic colorant, an ultraviolet inhibitor, a dispersant, a plasticizer, a nucleating agent, a crosslinking agent.

When the polymeric blend comprises components (A) to (C), the mat film or sheet of the present invention may be prepared by extruding or molding the polymer blend at a molding temperature of 180 to 280 °C , preferably 200 to 250 °C, followed by cooling the resulting film or sheet to a temperature below 50°C, preferably below 30 °C.

When the polymer blend comprises components (A) to (E), the mat film or sheet of the present invention may be prepared by extruding or molding the polymer blend at a molding temperature of 180 to 280 °C, preferably 220 to 270 °C, followed by cooling the resulting film or sheet to a temperature below 50°C, preferably below 30 °C. When the molding temperature is 280°C or higher, the mat properties deteriorate, and inversely, when the molding temperature is 180 °C or lower, an uneven and rough surface is obtained unpreferably. When the cooling temperature is 50°C or higher, a film or sheet having a surface gloss (60°) of 30 % or more is obtained unpreferably. The preferred gloss (60°) is 20 % or less.

Any method may be employed, but a conventional molding method such as calendering, inflation technique, T-die technique, and the like may be preferably employed. Above all, the polymer blend comprising components (A) to (E) is preferably molded by T-die technique at a molding temperature of 180 to 280 °C to provide a film or sheet, followed by contacting the resulting film or sheet with a mat roll and a touch roll cooled to a temperature below 50°C.

The mat roll is one of embossing rolls, and any conventional embossing roll may be employed. Any conventional touch roll may be employed, but a roll with a layer having a Shore hardness (HS) of 70 to 90 and made of a synthetic rubber such as silicon rubber or NBR is employed preferably to prevent the sticking of film to the roll surface.

The folowing Examples will illustrate the present invention, which by no means limits the invention.

## Example

The following are the components (A) to (E) used in Examples and Comparative Examples in the present invention.

Component (A):

A1: Polypropylene

[Density = 0.905 g/cm$^3$, MFR = 8 g/10 min; NISSEKI POLYPRO J 650 G, a product of Nippon Petrochemicals Co., Ltd.]

A2: Polypropylene

[Density = 0.905 g/cm$^3$, MFR = 8 g/10 min, crystallization temperature = 117 °C; NISSEKI POLYPRO J 150 G, a product of Nippon Petrochemicals Co., Ltd.]

A3: Polypropylene

[Density = 0.905 g/cm$^3$, MFR = 8 g/10 min, crystallization temperature = 110 °C; NISSEKI POLYPRO J 350 G, a product of Nippon Petrochemicals Co., Ltd.]

A4: Polypropylene

[Density = 0.905 g/cm$^3$, MFR = 2 g/10 min, crystallization temperature = 104 °C; NISSEKI POLYPRO J 420 G, a product of Nippon Petrochemicals Co., Ltd.]

Component (B):

The following ethylene 1-butene copolymers (VLDPE) were obtained by copolymerization of ethylene and 1-butene in the presence of a catalyst comprising $AlEt_3$ and a solid catalyst component obtained from anhydrous $MgCl_2$, 1,2-dichloroethane and $TiCl_4$.

B1: VLDPE

[Density = 0.900 g/cm$^3$, MFR = 0.5 g/10 min, crystallization temperature = 102 °C, Tm = 118°C, 1-butene content = 10 % by mole, insolubles in boiling hexane = 60 % by weight]

B2: LLDPE

[Density = 0.922g/cm$^3$, MFR = 2.0 g/10 min, crystallization temperature = 108 °C; NISSEKI LINIREX AF 3310, a product of Nippon Petrochemicals Co., Ltd.]

B3: LLDPE

[Density = 0.922g/cm$^3$, MFR = 0.8 g/10 min, crystallization temperature = 106 °C; NISSEKI LINIREX AF 1210, a product of Nippon Petrochemicals Co., Ltd.]

Component (C):

C1: Low-density polyethylene by a high-pressure radical polymerization process

[Density = 0.922g/cm$^3$, MFR = 1.0 g/10 min, crystallization temperature = 107 °C; NISSEKI REXRON F 22, a product of Nippon Petrochemicals Co., Ltd.]

C2: EVA by a high-pressure radical polymerization process

[Density = 0.929g/cm$^3$, MFR = 0.3 g/10 min, crystallization temperature = 94 °C; NISSEKI REXRON V141, a product of Nippon Petrochemicals Co., Ltd. ]

C3: EEA by a high-pressure radical polymerization process

[Density = 0.929g/cm$^3$, MFR = 0.3 g/10 min, crystallization temperature = 90 °C; NISSEKI REXRON V1040, a

product of Nippon Petrochemicals Co., Ltd.]

C4: Maleic anhydride-modified ethylene-1-butene copolymer (hereinafter referred to as MAnLLDPE)

[Density = 0.92g/cm$^3$, MFR = 1.2 g/10 min, MAn content = 0.2 % by weight, PO = 0.05 % by weight; a product of Nippon Petrochemicals Co., Ltd.]

Component (D):

D1: Calcium carbonate

Component (E):

E1: Tetrabromobisphenol A (TBA) (Firegard, a product of Teijin-Kasei Co., Ltd.]
E2: Magnesium hydroxide (Kisuma 5B, a product of Kyowa Chemical Co., Ltd.]
The following are the method for measuring Tm by DCS and the method for determining $C_6$ insolubles content in the present invention:

(Measurement of Tm by DSC)

About 5 mg of a specimen is weighed from a hot-pressed 100 µm thick film. Then, it is set on a differntial scanning calorimeter. The temperature is raised to 170 °C, at which temperature the specimen is held for 15 minutes. Thereafter, the specimen is cooled to 0 °C at a rate of 2.5 °C/min. Next, from this state the temperature is raised to 170 °C at a rate of 10 °C/min. The temperature at the vertex position of the maximum peak out of peaks which appeared during the heat-up period from 0 °C to 170 °C is regarded as Tm.

($C_6$ insolubles content)

A 200µm thick sheet is formed using a hot press, from which are cut out three 20 mm × 30 mm sheets. Using these sheets, extraction is made in boiling n-hexane for 5 hours by means of a double tube type Soxhlet extractor. Then, the insolubles are taken out and vacuum-dried (50 °C. 7 hours), and thereafter $C_6$ content of insolubles is calculated in accordance with the following equation:

$$C_6 \text{ content of insolubles (wt. \%)} = \text{(Sheet wt. after extraction)/(Sheet wt. before extraction)} \times 100$$

(Molding Apparatus and Conditions)

Extruder: a product of Tanabe Kikai Co., Ltd., a cylinder bore of 50 mm, a screw L/D ratio of 22, a coat hanger die of 600 mm in width, a lip gap of 1.0 mm, roll cooling

Extrusion temperature:

230°C (cylinder temperature = 230 °C, T-die temperature = 230°C)

Metallic mat roll:

Touch roll; Silicon rubber roll (Shore hardness = 80 °) Cooling temperature: 25 °C metallic mat roll
Rate of film making: 5 m/min
Thickness of film: 100µm

Using the films and sheets prepared from the polymer blends as shown in Table, the properties of the films or sheets were measured by the folowing methods.

| | |
|---|---|
| Density: | JIS K 6758 |
| MFR: | JIS K 6758 |
| Crystallization Temperature: | JIS K 7121 |
| Haze: | ASTM D 1003 |

| | |
|---|---|
| Gloss: | JIS Z 8741 |
| Yield Strength: | JIS K 6758 |
| Tensile Strength at Break: | JIS K 6758 |
| Elongation at Break: | JIS K 6758 |
| Tensile Strength: | ASTM D 1922-61 T |
| Tensile Modulus: | Specimen: 350 mm (L) × 20 mm(W)<br>Speed of testing: 20 mm/min<br>Distance between grips: 250 mm<br>Speed of chart: 1000 mm/min |

Tensile modulus was determined from a load (P) corresponding to 1 % deformation of the film.

Chalking by folding: The extent of chalking of the specimen after folding was classified by visual inspection into three ranks.

○ : no chalking
Δ : a little chalking
× : chalking

Covering Power:

The visibleness through the specimen was classified by visual inspection into two ranks:

○ : not visible
× : visible

Erichsen Test: According to JIS K 6744

○ : no delamination
Δ : a little delamination
× : delamination

Erichsen (initial): Conducted immediately after lamination.

Erichsen (after boiling): Conducted after immersion in boiling water for 60 min, followed by rapid quenching by cold water.

Erichsen (cold): Conducted under a temperature below 5°C.

Examples 1 to 4, Comparative Examples 1 to 4

As shown in Table 1, the propylene polymer or copolymer as component (A), and the VLDPE or LLDPE as component (B) were used. Properties of the films prepared from these polymer blends are set forth in the same Table in order to clarify the effect of the ratio (A) : (B), as well as the effect of molding conditions using the T-die.

Examples 5 to 9, Comparative Examples 5 to 8

In Examples 5 to 9, the propylene polymer or copolymer as component (A), and the VLDPE or LLDPE as component (B) were used, wherein the component (A) has an MFR of 2 to 8 g/10 min, the component (B) has an MFR of 0.5 to 2.9 g/10 min, an MFR ratio of (A) to (B) is 5 to 20, and a difference in crystalline temperature between the (A) and (B) is more than 5°C.

In Comparative Examples 5 to 8, properties of the films are set forth in Table 2 in order to clarify the effect of a change in the MFR ratio and the difference in crystalline temperature on the properties.

Examples 10 to 19, Comparative Examples 9 to 11

In Examples 10 to 19, the propylene polymer or copolymer as component (A), the VLDPE as component (B), the high-pressure radical polymerization process low-density polyethylene, the high-pressure process ethylene copolymer, or the modified polyolefin resin as component (C), the inorganic filler as component (D), and the flame retardant as component (D) were used. The results are set forth in Table 3-1.

In comparative Examples 9 to 11, properties of the films are set forth in order to clarify the effect of a change in

the composition of the polymer blend. The results are set forth in Table 3-2.

Examples 20 to 33, Comparative Examples 12 to 14

In Examples 20 to 33, the inorganic filler as component (D) was further incorporated into the polymer blend.

In Comparative Examples 12 to 14, component (B) was not used, or neither (B) nor (D) was used. The test results are set forth in Table 4-1 and 4-2.

Examples 34 to 38, Comparative Examples 12 to 14

In Examples 34 to 38, the inorganic filler as component (D), and the flame retardant as component (E) were further used.

In Comparative Examples 12 to 14, component (B) was not used, or any of (B),(D) and (E) was not used. The test results are set forth in Table 5.

Example 39 to 42

In Examples 39 to 42, the same composition described in example 1 was examined by varying the cooling temperature of the metallic mat roll and measuring the gloss property of the films shown as the below mentioned table.

| | Cooling Temperature (°C) | Gloss(60°) (%) |
|---|---|---|
| Example 39 | 60 | 40 |
| Example 40 | 45 | 28 |
| Example 41 | 30 | 13 |
| Example 42 | 20 | 4.5 |

The polyolefin-based mat films or sheets of the present invention can be prepared from a polymer blend comprising a propylene polymer or copolymer as component (A) and a specific ethylene-α-olefin copolymer (VLDPE, so-called "super low-density polyethylene") as component (B). The polymer blend may further comprise a high-pressure radical polymerization process ethylene polymer or copolymer and /or a modified polyolefin-based resin as component (C). The above polymer blend may further comprise an inorganic filler as component (D) and a flame retardant as component (E). It will be apparent from the above description and Examples that the mat films or sheets of the present invention are excellent in tensile modulus, flexibility, impact resistance, thermal resistance, laminating properties, flame resistance, chalking resistance, covering power, scratch resistance, and can be widely used for fabricating adhesive tapes, covers or cases for stationeries, fashion bags, sheets for interior finish work in construction and automobile industries, and sheetsfor dressing steel plates.

Table 1

| | Example | | | | Comparative Example | | | |
|---|---|---|---|---|---|---|---|---|
| | 1 | 2 | 3 | 4 | 1 | 2 | 3 | 4 |
| Component A (Wt%) | | | | | | | | |
| A1 : PP (J650G) | 85 | 70 | - | 15 | - | - | 70 | 70 |
| A2 : PP (J150G) | - | - | 80 | - | 70 | 100 | - | - |
| Component B (Wt%) | | | | | | | | |
| B1 : VLDPE | 15 | 30 | 70 | 85 | - | - | 30 | 30 |
| B2 : LL(AF3310) | - | - | - | - | - | - | - | - |
| Molding Method | T-die | T-die | T-die | T-die | T-die | T-die | T-die | T-die |
| Molding Temp. (°C) | 230 | 230 | 230 | 230 | 230 | 230 | 230 | 230 |
| Mat Roll Cooling Temp. (°C) | 25 | 25 | 25 | 25 | 25 | 25 | 25 | 60 |
| Yield Strength (Kgf/cm$^2$) | 255 | 220 | 180 | 105 | 290 | 380 | 210 | 205 |

Table 1 (continued)

| | Example | | | | Comparative Example | | | |
|---|---|---|---|---|---|---|---|---|
| | 1 | 2 | 3 | 4 | 1 | 2 | 3 | 4 |
| Tensile Strength at Break (Kgf/cm$^2$) | 400 | 370 | 300 | 243 | 420 | 450 | 360 | 350 |
| Elongation at Break (%) | 800 | 670 | 600 | 740 | 600 | 700 | 650 | 600 |
| Tensile Modulus (Kgf/cm$^2$) | 3500 | 3000 | 2000 | 800 | 5500 | 9000 | 2800 | 2700 |
| Gloss (%) | 12 | 10 | 9 | 11 | 40 | 50 | 32 | 35 |

Table 2

| | Example | | | | | Comparative Example | | | |
|---|---|---|---|---|---|---|---|---|---|
| | 5 | 6 | 7 | 8 | 9 | 5 | 6 | 7 | 8 |
| Component A (Wt%) | | | | | | | | | |
| A2 : PP (J150G) | 85 | 70 | - | 15 | 70 | - | - | - | - |
| A3 : PP (J350G) | - | - | 30 | - | - | - | 70 | 70 | 100 |
| A4 : PP (J420G) | - | - | - | - | - | 70 | - | - | - |
| Component B (Wt%) | | | | | | | | | |
| B1 : VLDPE | 15 | 30 | 70 | 85 | 30 | 30 | - | - | - |
| B2 : LL(AF3310) | - | - | - | - | - | - | 30 | - | - |
| B3 : LL(AF1210) | - | - | - | - | - | - | - | 30 | - |
| MFR Ratio (A MFR/B MFR) | 16 | 16 | 16 | 16 | 16 | 4 | 4 | 10 | - |
| Difference in Cristalline Temp. (Δ T°C) | 15 | 15 | 8 | 15 | 14 | 2 | 2 | 4 | - |
| Tensile Strength at Break (Kgf/cm$^2$) | 320 | 260 | 210 | 220 | 270 | 280 | 260 | 270 | 370 |
| Elongation at Break (%) | 500 | 530 | 430 | 440 | 520 | 580 | 510 | 590 | 650 |
| Tensile Modulus (Kgf/cm$^2$) | 5400 | 4050 | 2360 | 2560 | 4260 | 3480 | 4150 | 3400 | 5000 |
| Tear Strength (g) | 177 | 255 | 405 | 436 | 232 | 210 | 125 | 220 | 57 |
| Gloss (%) | 15 | 16 | 14 | 12 | 16 | 56 | 65 | 45 | 61 |
| Haze (%) | 48 | 53 | 56 | 51 | 47 | 24 | 32 | 30 | 18 |

Table 3-1

| | Example | | | | | | | | | |
|---|---|---|---|---|---|---|---|---|---|---|
| | 10 | 11 | 12 | 13 | 14 | 15 | 16 | 17 | 18 | 19 |
| Component A (Wt%) | | | | | | | | | | |
| A2 : PP (J150G) | 70 | 15 | - | - | 50 | - | 70 | 60 | 60 | - |
| A3 : PP (J350G) | - | - | 20 | 70 | - | - | - | - | - | 60 |
| A4 : PP (J420G) | - | - | - | - | - | 16 | - | - | - | - |
| Component B (Wt%) | | | | | | | | | | |
| B1 : VLDPE | 15 | 15 | 10 | 15 | 25 | 15 | 15 | 25 | 25 | 25 |
| Component C (Wt%) | | | | | | | | | | |
| C1 : LDPE(F22) | - | - | - | - | - | - | 15 | - | - | - |
| C2 : EVA(V141) | 15 | 70 | 70 | | 25 | 70 | | | | |
| C3 : EEA(A1040) | - | - | - | 15 | - | - | - | - | - | - |
| C4 : MAnLLDPE | - | - | - | - | - | - | - | 15 | 15 | 15 |

Table 3-1 (continued)

| | Example | | | | | | | | | |
|---|---|---|---|---|---|---|---|---|---|---|
| | 10 | 11 | 12 | 13 | 14 | 15 | 16 | 17 | 18 | 19 |
| Component D (parts by weight) | | | | | | | | | | |
| D1 : Ca-carbonare | - | - | - | - | - | - | - | - | 20 | - |
| Component E (parts by weight) | | | | | | | | | | |
| E1 : TBA | - | - | - | - | - | - | - | - | 7 | - |
| E2 : $Mg(OH)^2$ | - | - | - | - | - | - | - | - | - | 100 |
| MFR Ratios (A MFR/B MFR) | 16 | 16 | 16 | 16 | 16 | 4 | 16 | 16 | 16 | 16 |
| Difference in Cristalline Temp. (Δ T°C) | 15 | 15 | 8 | 8 | 15 | 2 | 15 | 15 | 15 | 8 - |
| Tensile Strength at Break ($Kgf/cm^2$) | 275 | 215 | 225 | 265 | 250 | 220 | 290 | 255 | 270 | 245 |
| Elongation at Break (%) | 510 | 490 | 510 | 500 | 495 | 460 | 500 | 530 | 470 | 350 |
| Tensile Modulus ($Kgf/cm^2$) | 4350 | 2830 | 2640 | 4030 | 3110 | 2360 | 4500 | 4000 | 4200 | 4500 |
| Tear Strength (g) | 320 | 445 | 432 | 333 | 375 | 295 | 300 | 400 | 250 | 250 |
| Gloss (%) | 5 | 7 | 10 | 4 | 6 | 28 | 6 | 5 | 3 | 3 |
| Haze (%) | 73 | 70 | 68 | 75 | 71 | 16 | 71 | 74 | 77 | 78 |

Table 3-2

| | Comparative Example | | |
|---|---|---|---|
| | 9 | 10 | 11 |
| Component A (Wt%) | | | |
| A2 : PP (J150G) | 100 | 75 | - |
| A3 : PP (J350G) | - | - | - |
| A4 : PP (J420G) | - | - | 70 |
| Component B (Wt%) | | | |
| B1 : VLDPE | - | - | 30 |
| Component C (Wt%) | | | |
| C1 : LDPE(F22) | - | - | - |
| C2 : EVA(V141) | - | 25 | - |
| C3 : EEA(A1040) | - | - | - |
| C4 : MAnLLDPE | - | - | - |
| Component D (parts by weight) | | | |
| D1 : Ca-carbonare | - | - | - |
| Component E (parts by weight) | | | |
| E1 : TBA | - | - | - |
| E2 : $Mg(OH)_2$ | - | - | - |
| MFR Ratio (A MFR/B MFR) | - | - | 4 |
| Difference in Cristalline Temp. (Δ T°C) | - | - | 2 |
| Tensile Strength at Break ($Kgf/cm^2$) | 430 | 300 | 280 |
| Elongation at Break (%) | 610 | 480 | 580 |
| Tensile Modulus ($Kgf/cm^2$) | 8500 | 4600 | 3480 |
| Tear Strength (g) | 70 | 200 | 210 |
| Gloss (%) | 60 | 45 | 30 |
| Haze (%) | 41 | 35 | 20 |

Table 4-1

| | Examples | | | | | | | Comparative Examples | | |
|---|---|---|---|---|---|---|---|---|---|---|
| | 20 | 21 | 22 | 23 | 24 | 25 | 26 | 12 | 13 | 14 |
| Component A (Wt%) | | | | | | | | | | |
| A1 : PP (J650G) | 85 | 70 | 60 | 50 | 40 | 30 | 15 | 100 | - | 70 |
| A2 : PP (J150G) | - | - | - | - | - | - | - | - | 100 | - |
| Component B (Wt%) | | | | | | | | | | |
| B1 : VLDPE | 15 | 30 | 40 | 50 | 60 | 70 | 85 | - | - | 30 |
| Component D (parts by weight) | | | | | | | | | | |
| D1 : Ca-carbonate | 20 | 20 | 20 | 20 | 20 | 20 | 20 | - | - | - |
| Yield Strength ($Kgf/cm^2$) | 240 | 205 | 180 | 158 | 140 | 121 | 88 | 290 | 380 | 220 |
| Tensile Strength at Break ($Kgf/cm^2$) | 380 | 350 | 320 | 300 | 280 | 256 | 223 | 450 | 430 | 370 |
| Elongation at Break (%) | 800 | 670 | 680 | 700 | 750 | 720 | 740 | 640 | 610 | 670 |
| Tensile Modulus ($Kgf/cm^2$) | 4800 | 4300 | 3800 | 3200 | 2700 | 2200 | 1400 | 7000 | 8500 | 8000 |
| Gloss (%) | 4.5 | 3.3 | 3.2 | 3.4 | 3.3 | 3.0 | 3.0 | 40 | 60 | 15 |
| Chalking (by folding) | Δ | ○ | ○ | ○ | ○ | ○ | ○ | × | ○ | Δ |
| Covering Power | ○ | ○ | ○ | ○ | ○ | ○ | ○ | × | × | × |

Table 4-2

| | Examples | | | | | | |
|---|---|---|---|---|---|---|---|
| | 27 | 28 | 29 | 30 | 31 | 32 | 33 |
| Component A (Wt%) | | | | | | | |
| A1 : PP (J650G) | 70 | 70 | 70 | 50 | | | |
| A2 : PP (J150G) | - | - | - | 50 | 40 | 30 | 15 |
| Component B (Wt%) | | | | | | | |
| B1 : VLDPE | 30 | 30 | 30 | 50 | 60 | 70 | 85 |
| Component D (parts by weight) | | | | | | | |
| D1 : Ca-carbonate | 50 | 100 | 140 | 20 | 20 | 20 | 20 |
| Yield Strength ($Kgf/cm^2$) | 190 | 156 | 141 | 205 | 180 | 160 | 115 |
| Tensile Strength at Break ($Kgf/cm^2$) | 327 | 270 | 243 | 330 | 310 | 285 | 250 |
| Elongation at Break (%) | 540 | 470 | 350 | 700 | 750 | 720 | 740 |
| Tensile Modulus ($Kgf/cm^2$) | 4950 | 6930 | 8900 | 3200 | 3300 | 2600 | 1700 |
| Gloss (%) | 2.5 | 2.0 | 1.8 | 3.4 | 3.3 | 3.0 | 3.0 |
| Chalking (by floding) | Δ | Δ | Δ | ○ | ○ | ○ | ○ |
| Covering Power | ○ | ○ | ○ | ○ | ○ | ○ | ○ |

Table 5

| | Examples | | | | | Comparative Examples | | |
|---|---|---|---|---|---|---|---|---|
| | 34 | 35 | 36 | 37 | 38 | 12 | 13 | 14 |
| Component A (Wt%) | | | | | | | | |
| A1 : PP (J650G) | 70 | 30 | 70 | 70 | 70 | 100 | - | 70 |
| A2 : PP (J150G) | - | - | - | - | - | - | 100 | - |
| Component B (Wt%) | | | | | | | | |

Table 5 (continued)

| | Examples | | | | | Comparative Examples | | |
|---|---|---|---|---|---|---|---|---|
| | 34 | 35 | 36 | 37 | 38 | 12 | 13 | 14 |
| B1 : VLDPE | 30 | 70 | 30 | 30 | 30 | - | - | 30 |
| Component C (parts by weight) | | | | | | | | |
| C4 : MAnLLDPE | 10 | 10 | 10 | 10 | 10 | - | - | - |
| Component D (parts by weight) | | | | | | | | |
| D1 : Ca-carbonate | 20 | 20 | 50 | 140 | - | - | - | - |
| Component E (parts by weight) | | | | | | | | |
| E1 : TBA | 5 | 5 | 5 | 5 | - | - | - | - |
| E2 : $MG(OH)^2$ | - | - | - | - | 100 | - | - | - |
| Yield Strength ($Kgf/cm^2$) | 195 | 110 | 175 | 135 | 150 | 290 | 380 | 220 |
| Tensile Strength at Break ($Kgf/cm^2$) | 380 | 275 | 360 | 250 | 290 | 450 | 500 | 370 |
| Elongation at Break (%) | 710 | 750 | 600 | 350 | 470 | 640 | 650 | 670 |
| Tensile Modulus ($Kgf/cm^2$) | 4000 | 2000 | 4750 | 8900 | 6700 | 7000 | 8500 | 3000 |
| Gloss (%) | 3.3 | 3.0 | 2.5 | 1.8 | 2.0 | 40 | 60 | 15 |
| Chalking (by folding) | ○ | ○ | Δ | Δ | Δ | × | ○ | Δ |
| Covering Power | ○ | ○ | ○ | ○ | ○ | × | × | × |
| Erichsen (initial) | ○ | ○ | ○ | ○ | ○ | × | × | Δ |
| Erichsen (after boiling) | ○ | ○ | ○ | ○ | ○ | × | × | × |
| Erichsen (cold) | ○ | ○ | Δ | Δ | Δ | × | × | × |

**Claims**

**1.** A mat film or sheet prepared from a polymer blend comprising

component (A); 10 to 90 % by weight of a propylene polymer or copolymer, and
component (B); 90 to 10 % by weight of an ethylene-α-($C_{3-12}$ olefin) copolymer satisfying the following conditions (I) to (III):

(I) a density of 0.860 to 0.910 $g/cm^3$;
(II) a maximum peak temperature of not lower than 100 °C as measured by DSC (differential scanning calorimetry);
(III) a content of insolubles in boiling n-hexane of not lower than 10 % by weight;

wherein said mat film or sheet is prepared by extruding or molding said polymer blend at a temperature of 180°C to 280 °C to provide a film or sheet, followed by cooling the resulting film or sheet to a temperature below 50 °C to give a mat film or sheet having a gloss (60°) of not more than 30 %.

**2.** A mat film or sheet prepared from a polymer blend comprising

component (A); 10 to 80 % by weight of a propylene polymer or copolymer,
component (B); 5 to 30 % by weight of an ethylene-α-($C_3$-$_{12}$ olefin) copolymer satisfying the following conditions (I) to (III):

(I) a density of 0.860 to 0.910 $g/cm^3$;
(II) a maximum peak temperature of not lower than 100 °C as measured by DSC (differential scanning calorimetry);
(III) a content of insolubles in boiling n-hexane of not lower than 10 % by weight;

component (C); 5 to 85 % by weight of at least one component selected from the group consisting of high-pressure radical polymerization process ethylene polymers or copolymers and polyolefin-based modified resins which have been modified by a monomer selected from the group consisting of

a) carboxylic acid group-, carboxylic acid ester group- or acid anhydride group-containing monomers,
b) epoxy group-containing monomers,
c) hydroxyl group-containing monomers,
d) amino group-containing monomers,
e) alkenyl cyclic imino ether derivative monomers, and
f) multifunctional monomers,

wherein said mat film or sheet is prepared by extruding or molding the above-described polymer blend at a temperature of 180°C to 280 °C to provide a film or sheet, followed by cooling the resulting film or sheet to a temperature below 50°C to give a film or sheet having a gloss (60°) of not more than 30 %.

**3.** A mat film or sheet according to Claim 2,
wherein said high-pressure radical polymerization process ethylene polymer or copolymer is an ethylene-vinylester copolymer, an ethylene -α, β-unsaturated carboxylic acid copolymer or carboxylic acid derivative thereof.

**4.** A mat film or sheet according to Claim 3, wherein said ethylene-vinylester copolymer is an ethylene-vinylacetate copolymer.

**5.** A mat film or sheet according to Claim 3, wherein said ethylene-α, β-unsaturated carboxylic acid copolymer or carboxylic acid derivative thereof is an ethylene-ethylacrylate copolymer.

**6.** A mat film or sheet according to any of the claims 1 to 5, wherein said propylene polymer or copolymer as component (A) has an MFR of 1 to 20 g/10 min; said ethylene-α-olefin copolymer as component (B) and/or said high-pressure radical polymerization process ethylene polymer or copolymer, and/or said polyolefin-based modified resin as component (C) have an MFR of 0.1 to 2.0 g/10 min; and the MFR ratio of component (A) to (B) is in a range of from 5 to 20.

**7.** A mat film or sheet according to any of the claims 1 to 6, wherein the difference in crystallization temperature of said component (A) from (B), or (A) from (C) is not less than 5°C.

**8.** A mat film or sheet according to any of the claims 1 to 7,
wherein said polymer blend further comprises 1 to 150 parts by weight of at least one of the components selected from the group consisting of inorganic fillers as component (D) and flame retardants as component (E), on the basis of 100 parts by weight of said components (A) + (B), or said components (A) + (B) + (C).

**9.** A mat film or sheet according to claim 8, wherein said inorganic filler as component (D) is calcium carbonate.

**10.** A mat film or sheet according to claim 8, wherein said flame retardant is an organic flame retardant.

**11.** A mat film or sheet according to claim 8, wherein said flame retardant is an inorganic flame retardant.

**12.** A method for the preparation of a mat film or sheet comprising
molding a polymer blend at 180 to 280 °C to provide a film or sheet, wherein the polymer blend comprises the following components (A) and (B):

component (A); 10 to 90 % by weight of a propylene polymer or copolymer, and
component (B); 90 to 10 % by weight of an ethylene-α-($C_{3-12}$ olefin) copolymer satisfying the following conditions (I) to (III):

(I) a density of 0.860 to 0.910 g/cm$^3$;
(II) a maximum peak temperature of not lower than 100 °C as measured by DSC (differential scanning calorimetry);
(III) a content of insolubles in boiling n-hexane of not lower than 10 % by weight;

cooling the resulting film or sheet to a temperature below 50°C to give a film or sheet having a gloss (60°) of not more than 30 %.

**13.** A method for the preparation of a mat film or sheet comprising

molding a polymer blend at 180 to 280 °C to providea film or sheet, wherein the polymer blend comprises the following components (A) to (C):

component (A); 10 to 80 % by weight of a propylene polymer or copolymer,
component (B); 5 to 30 % by weight of an ethylene-α-($C_{3-12}$ olefin) copolymer satisfying the following conditions (I) to (III):

(I) a density of 0.860 to 0.910 g/$cm^3$;
(II) a maximum peak temperature of not lower than 100 °C as measured by DSC (differential scanning calorimetry);
(III) a content of insolubles in boiling-hexane of not lower than 10 % by weight; and

component (C); 5 to 85 % byweight of at least one of the components selected from the group consisting of high-pressure radical polymerization process ethylene polymers or copolymers and polyolefin-based modified resins which have been modified by use of a monomer selected from the group consisting of

a) carboxylic acid group-, carboxylic acid ester group- or acid anhydride group-containing monomers,
b) epoxy group-containing monomers,
c) hydroxyl group-containing monomers,
d) amino group-containing monomers,
e) alkenyl cyclic imino ether derivative monomers, and
f) multifunctional monomers, and

cooling the resulting film or sheet to a temperature below 50°C to give a film or sheet having a gloss (60°) of not more than 30 %.

**14.** A method for the preparation of a mat film or sheet according to claim 12 or 13, wherein said polymer blend further comprises 1 to 150 parts by weight of at least one of the components selected from the group consisting of inorganic fillers as component (D) and flame retardants as component (E), on the basis of 100 parts by weight of said components (A) + (B), or said component (A) + (B) + (C).

**15.** A method for the preparation of a mat film or sheet according to claim 12, 13, or 14, wherein said molding is conducted by T-die method, and said cooling is conducted by contacting the resulting film or sheet with a mat roll and a touch roll.

**16.** A method for the preparation of a mat film or sheet according to claim 15, wherein said touch roll has a rubber-made surface layer having a Shore hardness of 70 to 90.

**17.** A method for the preparation of a mat film or sheet according to claim 15, wherein said mat roll is cooled by an inner circulation method using a fluid coolant.

## Patentansprüche

**1.** Matter Film oder matte Folie, der (die) aus einer Polymermischung hergestellt ist, die umfaßt:

Komponente (A): 10 bis 90 Gew.-% eines Propylenpolymers oder -copolymers, und
Komponente (B): 90 bis 10 Gew.-% eines Ethylen-α-($C_{3-12}$-Olefin)-Copolymers, das die folgenden Bedingungen (I) bis (III) erfüllt:

(I) eine Dichte von 0,860 bis 0,910 g/$cm^3$,
(II) eine mittels DSC (Differentialscanningkalorimetrie) gemessene maximale Peaktemperatur von nicht weniger als 100°C,
(III) einen Gehalt an unlöslichen Bestandteilen in siedendem n-Hexan von nicht weniger als 10 Gew.-%,

wobei der matte Film oder die matte Folie hergestellt ist durch Extrudieren oder Formen der Polymermischung bei einer Temperatur von 180°C bis 280°C, wobei ein Film oder eine Folie bereitgestellt wird, und anschließendes Abkühlen des resultierenden Films oder der resultierenden Folie auf eine Temperatur unter 50°C, wobei ein matter

Film oder eine matte Folie mit einem Glanz (60°) von nicht mehr als 30% erhalten wird.

**2.** Matter Film oder matte Folie, der (die) aus einer Polymermischung hergestellt wird, die umfaßt:

Komponente (A): 10 bis 80 Gew.-% eines Propylenpolymers oder -copolymers,
Komponente (B): 5 bis 30 Gew.-% eines Ethylen-α-($C_{3-12}$-Olefin)-Copolymers, das die folgenden Bedingungen (I) bis (III) erfüllt:

(I) eine Dichte von 0.860 bis 0,910 g/$cm^{3,}$
(II) eine mittels DSC (Differentialscanningkalorimetrie) gemessene maximale Peaktemperatur von nicht weniger als 100°C,
(III) einen Gehalt an unlöslichen Bestandteilen in siedendem n-Hexan von nicht weniger als 10 Gew.-%, und

Komponente (C) : 5 bis 85 Gew.-% mindestens einer Komponente, die ausgewählt ist aus der Gruppe bestehend aus durch Hochdruck-Radikalkettenpolymerisation erhaltenen Ethylenpolymeren oder -copolymeren und modifizierten Harzen auf der Basis von Polyolefin, die durch ein Monomer, das ausgewählt wurde aus der Gruppe bestehend aus

(a) Carbonsäuregruppen, Carbonsäureestergruppen oder Säureanhydridgruppen enthaltenden Monomeren,
(b) Epoxidgruppen enthaltenden Monomeren,
(c) Hydroxylgruppen enthaltenden Monomeren,
(d) Aminogruppen enthaltenden Monomeren,
(e) Monomeren vom Typ der Alkenylderivate cyclischer Iminoether,
(f) multifunktionellen Monomeren,

modifiziert wurden,
wobei der matte Film oder die matte Folie hergestellt ist durch Extrudieren oder Formen der oben beschriebenen Polymermischung bei einer Temperatur von 180°C bis 280°C, wobei ein Film oder eine Folie bereitgestellt wird, und anschließendes Abkühlen des resultierenden Films oder der resultierenden Folie auf eine Temperatur unter 50°C, wobei ein Film oder eine Folie mit einem Glanz (60°) von nicht mehr als 30% erhalten wird.

**3.** Matter Film oder matte Folie gemäß Anspruch 2, worin das durch Hochdruck-Radikalkettenpolymerisation hergestellte Ethylenpolymer oder -copolymer ein Ethylen-Vinylester-Copolymer, ein Ethylen-α,β-ungesättigte Carbonsäure-Copolymer oder ein Carbonsäurederivat davon ist.

**4.** Matter Film oder matte Folie gemäß Anspruch 3, worin das Ethylen-Vinylester-Copolymer ein Ethylen-Vinylacetat-Copolymer ist.

**5.** Matter Film oder matte Folie gemäß Anspruch 3, worin das Ethylen-α,β-ungesättigte Carbonsäure-Copolymer oder das Carbonsäurederivat davon ein Etylen-Ethylacrylat-Copolymer ist.

**6.** Matter Film oder matte Folie gemäß einem der Ansprüche 1 bis 5, worin das Propylenpolymer oder -copolymer als Komponente (A) einen MFR-Wert von 1 bis 20 g/10 min., das Ethylen-α-Olefin-Copolymer als Komponente (B) und/oder das durch Hochdruck-Radikalkettenpolymerisation hergestellte Ethylenpolymer oder -copolymer und/oder das modifizierte Harz auf Polyolefinbasis als Komponente (C) einen MFR-Wert von 0,1 bis 2,0 g/10 min aufweist, und das MFR-Verhältnis der Komponenten (A) zu (B) in einem Bereich von 5 bis 20 liegt.

**7.** Matter Film oder matte Folie gemäß einem der Ansprüche 1 bis 6, worin die Differenz der Kristallisationstemperaturen der Komponenten (A) und (B) oder (A) und (C) nicht weniger als 5°C beträgt.

**8.** Matter Film oder matte Folie gemäß einem der Ansprüche 1 bis 7, worin die Polymermischung ferner 1 bis 150 Gewichtsteile, bezogen auf 100 Gewichtsteile der Komponenten (A) + (B) oder der Komponenten (A) + (B) + (C), mindestens einer Komponente enthält, die ausgewählt wird aus der Gruppe bestehend aus anorganischen Füllstoffen als Komponente (D) und Flammschutzmitteln als Komponente (E).

**9.** Matter Film oder matte Folie gemäß Anspruch 8, worin der anorganische Füllstoff als Komponente (D) Calciumcarbonat ist.

**10.** Matter Film oder matte Folie gemäß Anspruch 8, worin das Flammschutzmittel ein organisches Flammschutzmittel ist.

**11.** Matter Film oder matte Folie gemäß Anspruch 8, worin das Flammschutzmittel ein anorganisches Flammschutzmittel ist.

**12.** Verfahren zur Herstellung eines matten Films oder einer matten Folie, das umfaßt:
Formen bei 180 bis 280°C einer Polymermischung, die die folgenden Komponenten (A) und (B) enthält:

Komponente (A): 10 bis 90 Gew.-% eines propylenpolymers oder -copolymers, und
Komponente (B): 90 bis 10 Gew.-% eines Ethylen-α-($C_{3-12}$-Olefin)-Copolymers, das die folgenden Bedingungen (I) bis (III) erfüllt:

(I) eine Dichte von 0,860 bis 0,910 g/$cm^3$,
(II) eine mittels DSC (Differentialscanningkalorimetrie) gemessene maximale Peaktemperatur von nicht weniger als 100°C,
(III) einen Gehalt an unlöslichen Bestandteilen in siedendem n-Hexan von nicht weniger als 10 Gew.-%,

wobei ein Film oder eine Folie erhalten wird, und Abkühlen des resultierenden Films oder der resultierenden Folie auf eine Temperatur unter 50°C, wobei ein Film oder eine Folie mit einem Glanz (60°) von nicht mehr als 30% erhalten wird.

**13.** Verfahren zur Herstellung eines matten Films oder einer matten Folie, das umfaßt:
Verformen einer Polymermischung bei 180 bis 280°C, die die folgenden Komponenten (A) bis (C) enthält:

Komponente (A) : 10 bis 80 Gew.-% eines Propylenpolymers oder -copolymers,
Komponente (B): 5 bis 30 Gew.-% eines Ethylen-α-($C_{3-12}$-Olefin)-Copolymers, das die folgenden Bedingungen (I) bis (III) erfüllt:

(I) eine Dichte von 0,860 bis 0,910 g/$cm^{3,}$
(II) eine mittels DSC (Differentialscanningkalorimetrie) gemessene maximale Peaktemperatur von nicht weniger als 100°C,
(III) einen Gehalt an unlöslichen Bestandteilen in siedendem n-Hexan von nicht weniger als 10 Gew.-%, und

Komponente (C): 5 bis 85 Gew.-% mindestens einer Komponente, die ausgewählt wird aus der Gruppe bestehend aus durch Hochdruck-Radikalkettenpolymerisation erhaltene Ethylenpolymeren oder -copolymeren und modifizierten Harzen auf der Basis von Polyolefin, die unter Verwendung eines Monomers, das ausgewählt wurde aus der Gruppe bestehend aus

(a) Carbonsäuregruppen, Carbonsäureestergruppen oder Säureanhydridgruppen enthaltenden Monomeren,
(b) Epoxidgruppen enthaltenden Monomeren,
(c) Hydroxylgruppen enthaltenden Monomeren,
(d) Aminogruppen enthaltenden Monomeren,
(e) Monomeren vom Typ der Alkenylderivate cyclischer Iminoether
(f) multifunktionellen Monomeren,

modifiziert wurden,
wobei ein Film oder eine Folie erhalten wird, und
Abkühlen des resultierenden Films oder der resultierenden Folie auf eine Temperatur unter 50°C, wobei ein Film oder eine Folie mit einem Glanz (60°) von nicht mehr als 30% erhalten wird.

**14.** Verfahren zur Herstellung eines matten Films oder einer matten Folie gemäß Anspruch 12 oder 13, wobei die Polymermischung ferner 1 bis 150 Gew.-Teile, bezogen auf 100 Gew.-Teile der Komponenten (A) + (B) oder der Komponenten (A) + (B) + (C), mindestens einer Komponente enthält, die ausgewählt wird aus der Gruppe bestehend aus anorganischen Füllstoffen als Komponente (D) und Flammschutzmitteln als Komponente (E).

**15.** Verfahren zur Herstellung eines matten Films oder einer matten Folie gemäß Anspruch 12, 13 oder 14, wobei das Formen mittels einem Verfahren unter Verwendung einer T-Düse und das Abkühlen durch Inkontaktbringen des resultierenden Films oder der resultierenden Folie mit einer Mattierungs- und einer Kontaktwalze durchgeführt wird.

**16.** Verfahren zur Herstellung eines matten Films oder einer matten Folie gemäß Anspruch 15, wobei die Kontaktwalze eine Oberflächenschicht aus einem Kautschuk mit einer Shore-Härte von 70 bis 90 aufweist.

**17.** Verfahren zur Herstellung eines matten Films oder einer matten Folie gemäß Anspruch 15, wobei die Mattierungswalze durch ein Innen-Zirkulationsverfahren unter Verwendung eines flüssigen Kühlmittels gekühlt wird.

**Revendications**

**1.** Film mat ou feuille mate préparés à partir d'un mélange de polymères comprenant

un constituant (A): 10 à 90 % en masse d'un polymère ou copolymère de propylène, et
un constituant (B): 90 à 10 % en masse d'un copolymère éthylènela-oléfine en $C_3$-$C_{12}$ satisfaisant aux conditions (I) à (III) ci-dessous:

(I) une densité de 0,860 à 0,910 g/cm$^3$;
(II) une température de pic maximale d'au moins 100°C, mesurée par CDB (calorimétrie différentielle à balayage);
(III) une teneur en produits insolubles dans le n-hexane bouillant d'au moins 10 % en masse;

ledit film mat ou ladite feuille mate étant préparés par extrusion ou moulage dudit mélange de polymères à une température de 180°C à 280°C en un film ou une feuille, puis refroidissement du film ou de la feuille formés à une température inférieure à 50°C pour l'obtention d'un film mat ou d'une feuille mate ayant un brillant (60°) d'au plus 30 %.

**2.** Film mat ou feuille mate préparés à partir d'un mélange de polymères comprenant

un constituant (A): 10 à 80 % en masse d'un polymère ou copolymère de propylène, et
un constituant (B): 5 à 30 % en masse d'un copolymère éthylènela-oléfine en $C_3$-$C_{12}$ satisfaisant aux conditions (I) à (III) ci-dessous:

(I) une densité de 0,860 à 0,910 g/cm$^3$;
(II) une température de pic maximale d'au moins 100°C, mesurée par CDB (calorimétrie différentielle à balayage);
(III) une teneur en produits insolubles dans le n-hexane bouillant d'au moins 10 % en masse;

un constituant (C): 5 à 85 % en masse d'au moins un constituant choisi dans le groupe formé par des polymères ou copolymères d'éthylène obtenus par un procédé de polymérisation radicalaire sous haute pression et des résines modifiées à base de polyoléfines qui ont été modifiées par un monomère choisi dans le groupe constitué par

a) des monomères contenant des groupes acide carboxylique, des groupes ester d'acide carboxylique ou des groupes anhydride d'acide,
b) des monomères contenant des groupes époxy,
c) des monomères contenant des groupes hydroxy,
d) des monomères contenant des groupes amino,
e) des monomères dérivés d'alcényl-iminoéthers cycliques, et
f) des monomères polyfonctionnels,

ledit film mat ou ladite feuille mate étant préparés par extrusion ou moulage du mélange de polymères décrit ci-dessus à une température de 180°C à 280°C en un film ou une feuille, puis refroidissement du film ou de la feuille formés à une température inférieure à 50°C pour l'obtention d'un film mat ou d'une feuille mate ayant un brillant

(60°) d'au plus 30 %.

3. Film mat ou feuille mate selon la revendication 2, dans lesquels ledit polymère ou copolymère d'éthylène obtenu par un procédé de polymérisation radicalaire sous haute pression est un copolymère éthylène/ester de vinyle, un copolymère éthylène/acide carboxylique $\alpha,\beta$-insaturé ou un de ses dérivés d'acide carboxylique.

4. Film mat ou feuille mate selon la revendication 3, dans lesquels ledit copolymère éthylène/ester de vinyle est un copolymère éthylène/acétate de vinyle.

5. Film mat ou feuille mate selon la revendication 3, dans lesquels ledit copolymère éthylène/acide carboxylique $\alpha$, $\beta$-insaturé ou son dérivé d'acide carboxylique est un copolymère éthylène/acrylate d'éthyle.

6. Film mat ou feuille mate selon l'une quelconque des revendications 1 à 5, dans lesquels ledit polymère ou copolymère de propylène utilisé comme constituant (A) a un indice de fluidité à l'état fondu de 1 à 20 g/10 min; ledit copolymère éthylène/$\alpha$-oléfine utilisé comme constituant (B) et/ou ledit polymère ou copolymère d'éthylène obtenu par un procédé de polymérisation radicalaire sous haute pression et/ou ladite résine modifiée à base d'une polyoléfine utilisés comme constituant (C) ont un indice de fluidité à l'état fondu de 0,1 à 2,0 g/10 min; et le rapport des indices de fluidité à l'état fondu de (A) à (B) est compris entre 5 et 20.

7. Film mat ou feuille mate selon l'une quelconque des revendications 1 à 6, dans lesquels la différence des températures de cristallisation desdits constituants (A) et (B) ou (A) et (C) est d'au moins 5°C.

8. Film mat ou feuille mate selon l'une quelconque des revendications 1 à 7, dans lesquels ledit mélange de polymères comprend en outre 1 à 150 parties en masse d'au moins un des constituants choisis dans le groupe constitué par des charges inorganiques comme constituant (D) et des agents ignifuges comme constituant (E), pour 100 parties en masse desdits constituants (A) + (B) ou desdits constituants (A) + (B) + (C).

9. Film mat ou feuille mate selon la revendication 8, dans lesquels ladite charge inorganique utilisée comme constituant (D) est du carbonate de calcium.

10. Film mat ou feuille mate selon la revendication 8, dans lesquels ledit agent ignifuge est un agent ignifuge organique.

11. Film mat ou feuille mate selon la revendication 8, dans lesquels ledit agent ignifuge est un agent ignifuge inorganique.

12. Procédé de préparation d'un film mat ou d'une feuille mate comprenant les étapes selon lesquelles

on moule un mélange de polymères à une température de 180 à 280°C pour obtenir un film ou une feuille, le mélange de polymères comprenant les constituants (A) et (B) ci-dessous:

constituant (A): 10 à 90 % en masse d'un polymère ou copolymère de propylène, et
constituant (B): 90 à 10 % en masse d'un copolymère éthylène/$\alpha$-oléfine en $C_3$-$C_{12}$ satisfaisant aux conditions (I) à (III) ci-dessous:

(I) une densité de 0,860 à 0,910 g/cm$^3$;
(II) une température de pic maximale d'au moins 100°C, mesurée par CDB (calorimétrie différentielle à balayage);
(III) une teneur en produits insolubles dans le n-hexane bouillant d'au moins 10 % en masse;

et on refroidit le film ou la feuille formés à une température inférieure à 50°C pour obtenir un film ou une feuille ayant un brillant (60°) d'au plus 30 %.

13. Procédé de préparation d'un film mat ou d'une feuille mate comprenant les étapes selon lesquelles

on moule un mélange de polymères à une température de 180 à 280°C pour obtenir un film ou une feuille, le mélange de polymères comprenant les constituants (A) à (C) ci-dessous:

constituant (A): 10 à 80 % en masse d'un polymère ou copolymère de propylène, et
constituant (B): 5 à 30 % en masse d'un copolymère éthylène/$\alpha$-oléfine en $C_3$-$C_{12}$ satisfaisant aux conditions (I) à (III) ci-dessous:

(I) une densité de 0,860 à 0,910 g/$cm^3$;
(II) une température de pic maximale d'au moins 100°C, mesurée par CDB (calorimétrie différentielle à balayage);
(III) une teneur en produits insolubles dans le n-hexane bouillant d'au moins 10 % en masse;

constituant (C): 5 à 85 % en masse d'au moins un constituant choisi dans le groupe formé par des polymères ou copolymères d'éthylène obtenus par un procédé de polymérisation radicalaire sous haute pression et des résines modifiées à base de polyoléfines qui ont été modifiées à l'aide d'un monomère choisi dans le groupe constitué par

a) des monomères contenant des groupes acide carboxylique, des groupes ester d'acide carboxylique ou des groupes anhydride d'acide,
b) des monomères contenant des groupes époxy,
c) des monomères contenant des groupes hydroxy,
d) des monomères contenant des groupes amino,
e) des monomères dérivés d'alcényl-iminoéthers cycliques, et
f) des monomères polyfonctionnels,

et on refroidit le film ou la feuille formés à une température inférieure à 50°C pour obtenir un film ou une feuille ayant un brillant (60°) d'au plus 30 %.

**14.** Procédé de préparation d'un film mat ou d'une feuille mate selon la revendication 12 ou 13, dans lequel ledit mélange de polymères comprend en outre 1 à 150 parties en masse d'au moins un des constituants choisis dans le groupe constitué par des charges inorganiques comme constituant (D) et des agents ignifuges comme constituant (E), pour 100 parties en masse desdits constituants (A) + (B) ou desdits constituants (A) + (B) + (C).

**15.** Procédé de préparation d'un film mat ou d'une feuille mate selon les revendications 12, 13 ou 14, dans lequel ledit moulage s'effectue par la méthode de la filière plate, et ledit refroidissement s'effectue par mise en contact du film ou de la feuille obtenue avec un rouleau de matage et un rouleau de contact.

**16.** Procédé de préparation d'un film mat ou d'une feuille mate selon la revendication 15, dans lequel ledit rouleau de contact a une couche superficielle en caoutchouc ayant une dureté Shore comprise entre 70 et 90.

**17.** Procédé de préparation d'un film mat ou d'une feuille mate selon la revendication 15, dans lequel ledit rouleau de matage est refroidi par une méthode de circulation interne à l'aide d'un réfrigérant fluide.

FIG. 1

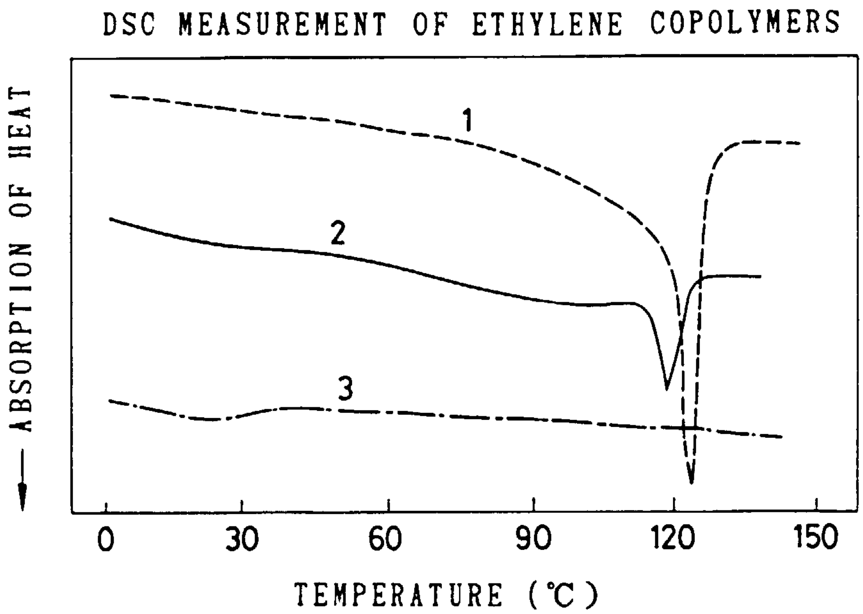


1 : LLDPE
2 : ETHYLENE－ α －OLEFIN COPOLYMER
(USED IN THE PRESENT INVENTION)
3 : EPR